# EUROPEAN PATENT SPECIFICATION

(11) **EP 4 492 798 B1**
(45) Date of publication and mention of the grant of the patent: **01.04.2026**
(21) Application number: 23784246.3
(22) Date of filing: 03.04.2023
(51) Int. Cl.: G06Q 30/0601, G06Q 30/0251, H04N 21/2187

(54) **INFORMATION DISPLAY METHOD AND APPARATUS, ELECTRONIC DEVICE AND STORAGE MEDIUM**
INFORMATIONSANZEIGEVERFAHREN UND -VORRICHTUNG, ELEKTRONISCHE VORRICHTUNG UND SPEICHERMEDIUM
PROCÉDÉ ET APPAREIL D'AFFICHAGE D'INFORMATIONS, DISPOSITIF ÉLECTRONIQUE ET SUPPORT DE STOCKAGE

(30) Priority: 08.04.2022 CN 202210370024
(43) Date of publication of application: 15.01.2025
(73) Proprietor: BEIJING YOUZHUJU NETWORK TECHNOLOGY CO. LTD., Beijing 101299 (CN)
(72) Inventor: WANG, Li, Beijing 100028 (CN); FENG, Lan, Beijing 100028 (CN); XIE, Zhiyao, Beijing 100028 (CN)
(74) Representative: Marks & Clerk LLP
(86) International application number: PCT/CN2023/085947
(87) International publication number: WO 2023/193683

(56) References cited:
- WO-A1-2017/101726
- WO-A1-2019/144743
- WO-A1-2020/000973
- CN-A- 110 362 266
- CN-A- 113 506 154
- CN-A- 113 645 474
- CN-A- 113 935 813

## Description

### CROSS-REFERENCE TO RELATED APPLICATIONS

This application is based on the application with a CN application number of 202210370024.0 with the filing date of April 8, 2022, and claims its priority.

### TECHNICAL FIELD

The embodiments of the disclosure relate to the technical field of information display, in particular to an information display method and apparatus, an electronic device and a storage medium.

### BACKGROUND

With the continuous development of video live streaming technology, people's demand for related functions in the live streaming channel (live room) is becoming more and more diversified, especially the display mode and display content of live streaming pages closely related to people's viewing experience.

Document CN113506154A discloses a commodity recommendation method which comprises the following steps : inquiring the commodity sales information in a live time; and determining an explosive commodity according to the commodity sales information. The commodity card of the explosive commodity is determined. The commodity card comprises commodity information and a commodity purchase link. The commodity cards are displayed in live pictures of the live broadcast. The method can increase the exposure rate of the explosive commodities, and improve the click quantity of the user to the explosive commodities. The document further discloses a commodity recommendation system. The document further discloses an electronic device and a storage medium.

Document CN113645474A discloses an interaction information processing method, a display method and electronic equipment. User behavior information for at least one object provided in the current online interaction space is acquired. A recommendation factor of each object is determined according to the user behavior information. The recommendation factor satisfies the target object of the set condition and is recommended to the target user. To the technical scheme provided by the embodiment of the invention, the information is effectively and accurately recommended, and the information conversion rate is improved.

### SUMMARY

In a first aspect, the present disclosure provides an information display method, comprising:
acquiring a popularity parameter of an object to be displayed, wherein the object to be displayed is an object not explained currently corresponding to a display page;
generating prompt information corresponding to the object to be displayed in response to the popularity parameter of the object to be displayed meeting a prompt condition, wherein the prompt information is configured to reflect popularity of the object to be displayed; and
displaying the prompt information on the display page.

In a second aspect, the present disclosure also provides an information display apparatus, comprising:
an acquisition module configured to acquire a popularity parameter of an object to be displayed, wherein the object to be displayed is an object not explained currently corresponding to a display page;
a generation module configured to generate prompt information corresponding to the object to be displayed in response to the popularity parameter of the object to be displayed meeting a prompt condition, wherein the prompt information is configured to reflect popularity of the object to be displayed; and
a display module configured to display the prompt information on the display page.

In a third aspect, the present disclosure also provides an electronic device, comprising:
a memory; and
a processor coupled to the memory, the processor configured to implement the information display method as described above based on instructions stored in the memory.

In a fourth aspect, the present disclosure also provides a computer-readable storage medium on which a computer program is stored which, when executed by a processor, implements the information display method described above.

In a fifth aspect, the present disclosure also provides a computer program, comprising: instructions that, when executed by a processor, cause the processor to perform any of the information display methods described above.

### BRIEF DESCRIPTION OF THE DRAWINGS

The accompanying drawings, which are incorporated in and constitute a part of this specification, illustrate embodiments consistent with the present disclosure and together with the description, serve to explain the principles of the present disclosure.

In order to more clearly illustrate technical solutions in the embodiments of the present disclosure or the prior art, the drawings needed in the description of the embodiments or the prior art will be briefly described below, and it is obvious for those ordinary skilled in the art that other drawings can be obtained according to these drawings without inventive labor.
FIG.1 is a flow diagram of an information display method provided by an embodiment of the present disclosure;
FIG.2 is a schematic diagram of a display page provided by an embodiment of the present disclosure;
FIG.3 is a schematic diagram of another display page provided by an embodiment of the present disclosure;
FIG.4 is a schematic diagram of another display page provided by an embodiment of the present disclosure;
FIG.5 is a schematic diagram of another display page provided by an embodiment of the present disclosure;
FIG.6 is a schematic structural diagram of an information display apparatus in an embodiment of the present disclosure;
FIG.7 is a schematic structural diagram of an electronic device in an embodiment of the present disclosure.

### DETAILED DESCRIPTION

In order that the above objects, features and advantages of the present disclosure may be more clearly understood, solutions of the present disclosure will be further described below. It should be noted that, in the case of no conflict, the embodiments and features in the embodiments of the present disclosure may be combined with each other.

In the following description, numerous specific details are set forth in order to provide a thorough understanding of the present disclosure, but the present disclosure may be practiced otherwise than as described herein; obviously, the embodiments disclosed in the specification are only a few embodiments of the present disclosure, and not all embodiments.

At present, how to meet users' diverse needs of live streaming page display, so as to enhance users' viewing experience is an urgent technical problem to be solved. In some live streaming scenes, the streamer (anchor) wants to introduce item M and item N to the viewers, but only one item is introduced at a time. In this case, when the streamer introduces the item M, the relevant information of the item N is not displayed on the public screen of the live streaming channel (live room), that is, the relevant information of the item N cannot be transmitted in this way.

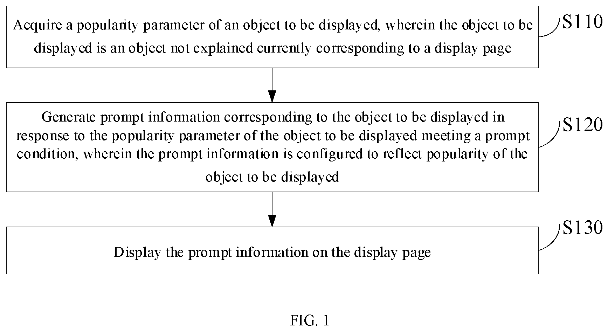

In view of this, FIG.1 is a flow diagram of an information display method provided by an embodiment of the present disclosure. This embodiment can be applied to the case of information display in a client. The method can be executed by an information display apparatus, which can be implemented in software and/or hardware. The apparatus can be configured in an electronic device, such as terminals, including but not limited to smart phones, palmtop computers, tablet computers, wearable devices with display screens, desktops, notebook computers, all-in-one machines, smart home devices and so on. Alternatively, this embodiment can be applied to the case of information display in a server, and the method can be executed by an information display apparatus, which can be implemented in software and/or hardware, and which can be configured in an electronic device, such as a server.

As shown in FIG.1, the method can specifically include the following steps.

In step S110, a popularity parameter of an object to be displayed is acquired, wherein the object to be displayed is an object not explained currently corresponding to a display page.

Optionally, the display page is a display page of the live streaming channel. The display page of the live streaming channel specifically refers to a public screen of the live streaming channel being on live. In addition, the display page can also be a public screen for the recorded video of the live streaming channel to play back the video.

The object is a product that the streamer shares with the viewers through live streaming. The product can be an article or a service, etc.

The objects shared by the streamer with the viewers through the display page are all objects corresponding to the display page. The display page corresponds to multiple objects. In the display page, the streamer can explain various objects corresponding to the display page one by one. The object currently being explained by the streamer is the object being explained. Except for the object currently being explained, the other objects are in a non-explaining state and are objects to be displayed. That is, the object to be displayed is an object not explained currently (a non-explaining object).

In response to the display page being a display page of the live streaming channel, the products shared by the streamer with the viewers through the display page of the live streaming channel are the products corresponding to the live streaming channel. A live streaming channel can correspond to multiple products. In the display page of the live streaming channel, the streamer can explain the products corresponding to the live streaming channel one by one. The product currently being explained by the streamer in the live streaming channel is the product being explained corresponding to the live streaming channel. Among the products corresponding to the live streaming channel, except for the product being explained, the other products are in a non-explaining state and are products to be displayed. That is, the object to be displayed is the product to be explained corresponding to the live streaming channel.

The popularity of the object to be displayed is a popularity degree of the object to be displayed, and the popularity parameter of the object to be displayed is a numerical value or grade used to characterize the popularity degree of the object to be displayed. Optionally, the popularity parameter includes at least one of: a number of followers, a number of favorites, a number of purchases, a number of comments, a number of shares, a number of views, a number of inquiries and a number of likes of the object to be displayed.

In step S120, prompt information corresponding to the object to be displayed is generated in response to the popularity parameter of the object to be displayed meeting a prompt condition, wherein the prompt information is configured to reflect popularity of the object to be displayed.

The purpose of setting the prompt condition is to screen the objects to be displayed. The reason for screening is that in practice, a live streaming channel may correspond to a large number of objects to be displayed. Through screening, objects of general interest to the public can be selected, the amount of data to be processed can be reduced, and the hit rate of users' interest points can be improved.

There are many ways to set the prompt condition, and this application does not limit it. For example, in response to there being only one popularity parameter, the prompt condition can be set to be that the popularity parameter is greater than or equal to a first threshold in a reference time period.

In response to there being two or more popularity parameters, a first threshold can be set for each of the popularity parameters, respectively. Further, first thresholds corresponding to different popularity parameters may be the same or different, which is not limited by this application.

Further, the reference time period can be selected in a variety of ways, which is not limited by this application. For example, in response to the display page being a display page of the live streaming channel, the reference time period is a duration from a start time of this live streaming to a current time. Alternatively, the reference time period may be 10 minutes before and starting from the current time.

In an embodiment, the prompt information includes the identification information and the popularity parameter of the object to be displayed. The identification information of the object to be displayed can be at least one of a number or a name of the object to be displayed. In response to the current live streaming display page corresponding to multiple objects to be displayed, this setting can facilitate users to further clarify which object to be displayed has higher popularity.

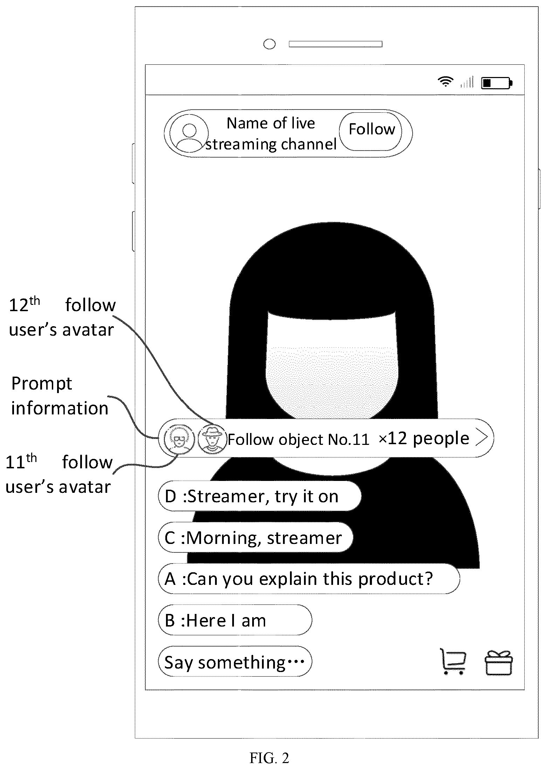

In another embodiment, the prompt information further includes identification information of the user who causes the popularity parameter of the object to be displayed to change. The identification information of the user can be at least one of the user's avatar or ID account number. Illustratively, FIG.2 is a schematic diagram of a display page provided by an embodiment of the present disclosure. Referring to FIG.2, it is assumed that there are 12 people following the object No.11 in the reference time period, the prompt information includes the avatars of at least some users who follow the object No.11.

Further, in practice, due to a limitation of the display page size, only the identification information of the last preset number of users that cause the popularity parameter of the object to be displayed to change can be displayed. Continuing to refer to FIG.2, the prompt information is set to include only the identification information of two users. Since there are 12 people following the object No.11 in the reference time period, the prompt information is set to include the avatar of the 11th follow user and the avatar of the 12th follow user.

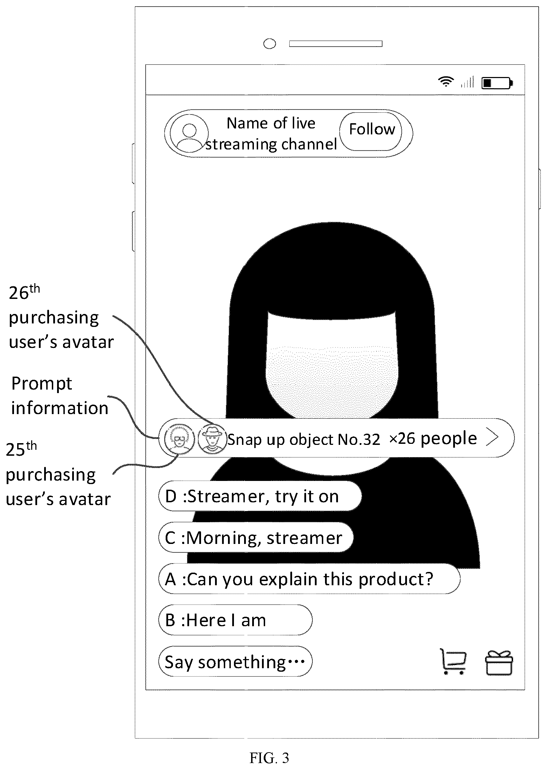

FIG.3 is a schematic diagram of another display page provided by an embodiment of the present disclosure. Referring to FIG.3, it is assumed that a total of 26 people have purchased the product No.32 within the reference time period, and the product No.32 is a product to be displayed that meets the prompt condition, the prompt message is "[25th purchasing user's avatar] [26th purchasing user's avatar] snap up the object No.32 ×26 people".

In step S130, the prompt information is displayed on the display page.

Optionally, when this step is executed, a dynamic effect of the prompt information moving from a first preset position to a second preset position on the display page is displayed on the display page. For example, referring to FIG.2 or FIG.3, the prompt information slides into the display page from a right edge of the display page and stops at a position above the comment area on the display page.

In the above technical solution, a popularity parameter of an object to be displayed is acquired through setting, wherein the object to be displayed is the object not explained currently corresponding to the display page; prompt information corresponding to the object to be displayed is generated in response to the popularity parameter of the object to be displayed meeting the prompt condition; the prompt information is configured to reflect popularity of the object to be displayed; the prompt information is displayed on the display page, wherein an essence of displaying the prompt information on the display page is to screen out the object to be displayed with high popularity according to the popularity parameter, generate prompt information to reflect the high popularity of the object to be displayed, and then display the prompt information on the display page, which realizes a purpose of transmitting the relevant information of the object to be displayed transparently. And by adopting the technical solution, because the prompt information can reflect the popularity of the object to be displayed, it is convenient for the user to intuitively and quickly understand the popularity of the object to be displayed, thereby stimulating the user's interest in the object to be displayed. Therefore, the efficiency of information transmission is improved.

On the basis of the above technical solutions, optionally, after S130, the information display method further comprises: updating the popularity parameter in the prompt information currently displayed or adjusting a display duration of the prompt information currently displayed in response to a change of the popularity parameter of the object to be displayed corresponding to the prompt information currently displayed. These two methods can be implemented either or both.

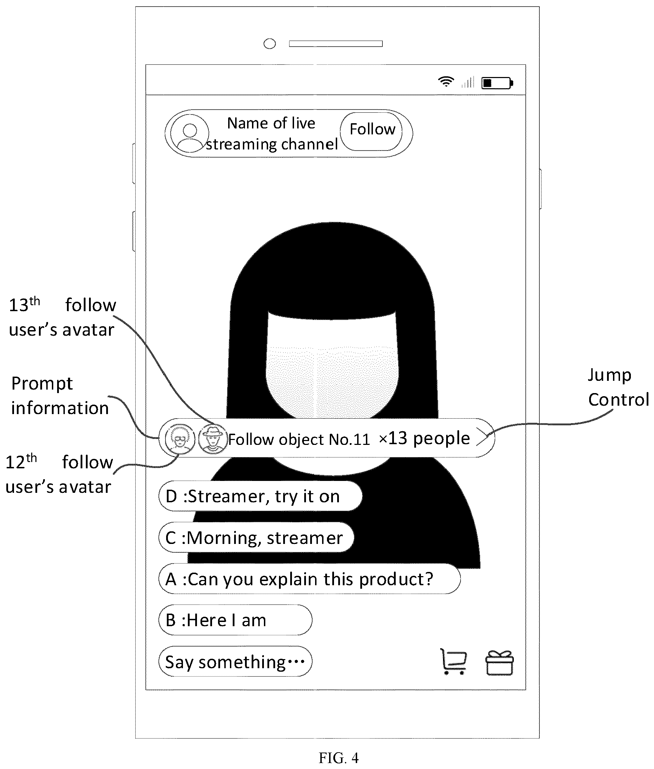

Updating the popularity parameter in the prompt information currently displayed in response to the change of the popularity parameter of the object to be displayed corresponding to the prompt information currently displayed means adjusting content of the prompt information according to the change of the popularity parameter. For example, referring to FIG.2, the current display page is displaying the prompt information of object No.11, and the prompt information is "[11th follow user's avatar] [12th follow user's avatar] follow object No.11 × 12 people", where "12" is the popularity parameter. FIG.4 is a schematic diagram of another display page provided by an embodiment of the present disclosure. Referring to FIG.4, in the process of displaying the prompt information of object No.11 on the display page, the 13th user follows object No.11 and the popularity parameter in the prompt information is updated from "12" to "13". Optionally, the identification information of the user in the prompt information can also be updated. That is, in the prompt information, the "[11th follow user's avatar] [12th follow user's avatar]" is updated to "[12th follow user's avatar] [13th follow user's avatar]".

Adjusting the display duration of the prompt information currently displayed in response to the change of the popularity parameter of the object to be displayed corresponding to the prompt information currently displayed means extending or shortening the display duration of the currently displayed prompt information according to the change of popularity parameter. For example, a default display duration of the prompt information is preset as 3s, and in response to a increase of the popularity parameter during the display, the display duration of the prompt information is extended from 3s to 5s. In response to the current display page displaying the prompt information of the object No.11, it is determined that the display duration of the prompt information of the object No.11 is 3s. In response to there being the 13th user following the object No.11 in the process of displaying the prompt information of the object No.11 on the display page, the display duration of the prompt information of the object No.11 is adjusted to 5s.

On the basis of the above technical solutions, in some embodiments, the information display method further comprises: displaying an object display page corresponding to the display page in the display page in response to a trigger operation for the prompt information, wherein the object display page comprises detailed information of the object to be displayed. The trigger operation refers to a selection operation, a click operation or a sliding operation for the prompt information, etc. It can be understood that the trigger operation is used to trigger a control used to open the object display page in the prompt information. The object display page is a list that summarizes detailed information of all objects corresponding to the display page. Alternatively, the detailed information of the objects corresponding to the display page (including the objects to be displayed and the objects being explained) can be displayed in the object display page in a form of cards. Related information of one object is summarized and displayed the in one card, and the information displayed in different cards belongs to different objects. The detailed information of the object to be displayed includes the identification information and a link of the object to be displayed. The identification information of the object to be displayed includes at least one of a number or a name of the object to be displayed. For example, the display page is a display page of the live streaming channel, and the object display page is a summary list of products corresponding to the live streaming channel. The detailed information of the object corresponding to the display page includes one or more of a number, a name, a picture, a product price and a purchase link of the product corresponding to the live streaming channel. Because the information amount displayed by the prompt information is limited, this setting can meet the needs of users who want to learn more about the detailed information of the object to be displayed corresponding to the prompt information.

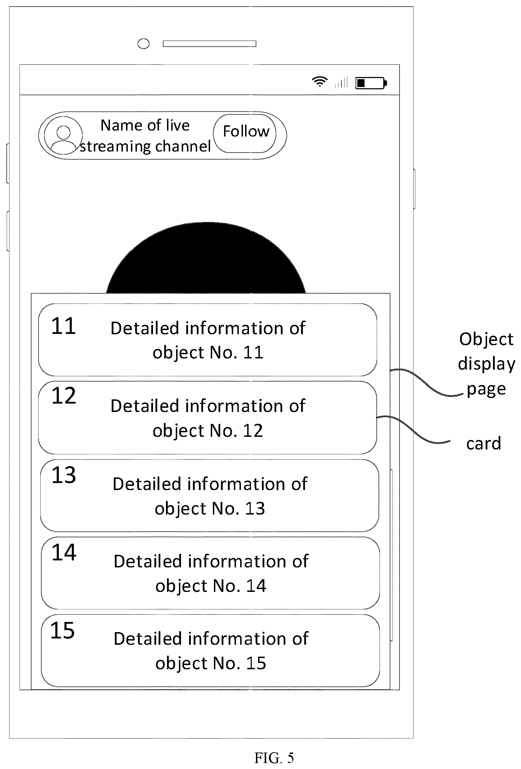

FIG.5 is a schematic diagram of another display page provided by an embodiment of the present disclosure. Referring to FIG.4, the prompt information displayed in the display page is the prompt information corresponding to the object No. 11. When the prompt information is triggered by the user, as shown in FIG. 5, the object display page corresponding to the display page is displayed in the display page, wherein the object display page includes the detailed information of the object No.11.

It should be emphasized that in the case that the display page corresponds to multiple objects, the detailed information of all objects cannot be displayed at one time in the object display page, the detailed information corresponding to the prompt information is anchored in the first screen of the object display page in response to the trigger operation for the prompt information. The "first screen" refers to the directly displayed page of the object display page, and the user can find the page of the detailed information corresponding to the prompt information without flipping or sliding the object display page.

Optionally, continuing to refer to FIG.4, the prompt information includes a jump control, and an object display page corresponding to the display page is displayed in the display page in response to the trigger operation for the jump control, wherein the object display page includes the detailed information of the object to be displayed. By adding a jump control to the prompt information, it is convenient for users to quickly understand that the prompt information has a jump function.

In some embodiments, a display position of the detailed information of the object to be displayed is a first display position in the object display page. In some embodiments, at least part of the detailed information of the object to be displayed is displayed in a highlighted state. For example, a number in the detailed information of the object to be displayed is highlighted. The purpose of this setting is to highlight the detailed information of the object to be displayed, which is convenient for users to quickly locate the detailed information of the object to be displayed corresponding to the prompt information among the detailed information of many objects, and improves the efficiency of information transmission.

In another embodiment, the step S130 includes: displaying the prompt information on the display page in response to the display page not comprising explanation information of an object currently being explained. The explanation information can be an explanation card, which is a card used to summarize and display relevant information of the object currently being explained. The explanation information may include identification information, a link or the like of the object currently being explained. The identification information of the object currently being explained includes at least one of the number or the name of the object currently being explained. The purpose of this setting is not to display the explanation information of the object currently being explained and the prompt information of the object to be displayed at the same time, so as to avoid the interference of the prompt information of the object to be displayed on the user's attention.

In another embodiment, S130 includes: in response to the display page comprising explanation information of an object currently being explained, displaying the prompt information after a display of the explanation information of the object currently explained is completed. The purpose of this setting is also not to display the explanation information of the object currently being explained and the prompt information of the object to be displayed at the same time, so as to avoid the interference of the prompt information of the object to be displayed on the user's attention.

In some embodiments, in response to the display page comprising the prompt information corresponding to the object to be displayed, the explanation information of the object currently being explained is displayed on the display page after receiving an instruction to display the explanation information of the object currently being explained. That is, in response to the display page first displaying the prompt information corresponding to the object to be displayed, this situation will not affect the display of the explanation information of the object currently being explained.

On the basis of the above technical solutions, optionally, displaying the prompt information on the display page includes: in response to popularity parameters of at least two objects to be displayed meet the prompt condition, displaying prompt information corresponding to the at least two objects in order on the display page. Optionally, in response to there being at least two objects to be displayed whose popularity parameters meet the prompt condition, the prompt information of the at least two objects to be displayed whose popularity parameters meet the prompt condition is arranged to form a display queue; the prompt information corresponding to the at least two objects to be displayed is displayed in order according to the order of the display queue; or, the prompt information corresponding to the at least two objects to be displayed is displayed by turn.

In an embodiment, during the first time period, display times of the prompt information corresponding to the same object to be displayed are less than or equal to a second preset value.

For example, assume that the first time period is set to be 1 minute and the second preset value is set to be 3. If objects No.11, No.15 and No.27 are all objects to be displayed, and the popularity parameters of objects No. 11, No.15 and No.27 all meet the prompt condition, the prompt information of objects No. 11, No.15 and No.27 are sorted, and the sorting result is prompt information of object 11, prompt information of object 15 and prompt information of object 27.

Before the prompt information corresponding to the object No.11 is displayed on the display page, it is determined whether the prompt information corresponding to the No.11 object has been displayed more than three times within one minute before the current moment. If not, the prompt information corresponding to the object No.11 is displayed, and if yes, it is determined whether the prompt information corresponding to the object No.12 has been displayed more than three times in the display page within one minute before the current moment. If yes, it is determined whether the prompt information corresponding to the object No.12 is displayed more than three times in the display page within one minute before the current moment; if not, the prompt information corresponding to the object No.12 is displayed; if yes, it is determined whether the prompt information corresponding to the object No.13 is displayed more than three times in the display page within one minute before the current moment. If not, the prompt information corresponding to the object No.13 is displayed.

Optionally, it can also be set that the total displaying times of the prompt information displayed on the display page are less than or equal to a fourth preset value during the second period.

Further, considering that the display page may also display prompt information of a user entering (for example, entering the live streaming channel) and the prompt information of a user purchasing the object currently being explained, optionally, it is set that a priority of the prompt information of the object to be displayed is higher than a priority of the prompt information of a user entering, and the priority of the prompt information of a user entering is higher than a priority of the prompt information of a user purchasing the object currently being explained. When displaying the above various kinds of prompt information on the display page, the higher the priority, the closer the display position of the prompt information is to the top of the display page.

It should be noted that for the sake of simple description, all the aforementioned method embodiments are expressed as a series of action combinations, but those skilled in the art should know that the present invention is not limited by the described action sequence, because some steps can be performed in other sequences or at the same time according to the present invention. Secondly, those skilled in the art should also know that the embodiments described in the specification are all preferred embodiments, and the actions and modules involved are not necessarily essential to the present invention.

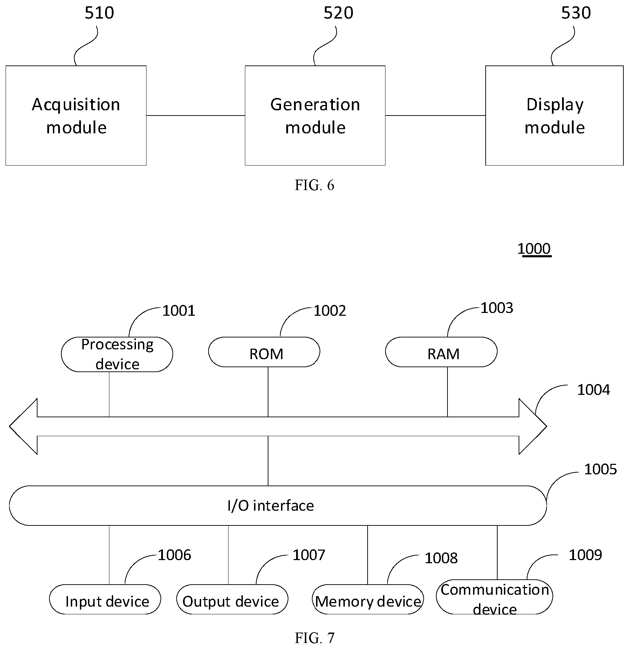

FIG.6 is a schematic structural diagram of an information display apparatus in an embodiment of the present disclosure. The information display apparatus provided by the embodiment of the present disclosure can be configured in a client or a server. Referring to FIG.6, the information display apparatus specifically comprises:
an acquisition module 510 configured to acquire a popularity parameter of an object to be displayed, wherein the object to be displayed is an object not explained currently corresponding to a display page;
a generation module 520 configured to generate prompt information corresponding to the object to be displayed in response to the popularity parameter of the object to be displayed meeting a prompt condition, wherein the prompt information is configured to reflect popularity of the object to be displayed; and
a display module 530 configured to display the prompt information on the display page.

Further, the display page is a display page of a live streaming channel, and the object to be displayed is a product to be explained corresponding to the live streaming channel.

Further, the popularity parameter comprises at least one of a number of followers, a number of favorites, a number of purchases, a number of comments, a number of shares, a number of views, a number of inquiries and a number of likes of the object to be displayed; and
the prompt condition is that the popularity parameter is greater than or equal to a first threshold in a reference time period.

Further, the prompt information comprises identification information of the object to be displayed and the popularity parameter.

Further, the display module is also configured to, after the prompt information is displayed on the display page, update the popularity parameter in the prompt information currently displayed in response to a change of the popularity parameter of the object to be displayed corresponding to the prompt information currently displayed.

Further, the display module is also configured to, after the prompt information is displayed on the display page, adjust a display duration of the prompt information currently displayed in response to a change of the popularity parameter of the object to be displayed corresponding to the prompt information currently displayed.

Further, the display module is also configured to:
display an object display page corresponding to the display page in the display page in response to a trigger operation for the prompt information, wherein the object display page comprises detailed information of the object to be displayed.

Further, a display position of the detailed information of the object to be displayed is a first display position in the object display page.

Further, at least part of the detailed information of the object to be displayed is displayed in a highlighted state.

Further, the display module is also configured to:
display the prompt information on the display page in response to the display page not comprising explanation information of an object currently being explained.

Further, the display module is also configured to:
in response to the display page comprising explanation information of an object currently being explained, display the prompt information after a display of the explanation information of the object currently explained is completed.

Further, the display module is also configured to:
in response to popularity parameters of at least two objects to be displayed meet the prompt condition, display prompt information corresponding to the at least two objects in order on the display page.

Further, the display module is also configured to:
arrange the prompt information of the at least two objects to be displayed to form a display queue; and
display the prompt information corresponding to the at least two objects to be displayed in order according to the order of the display queue.

Further, the display module is also configured to:
display the prompt information corresponding to the at least two objects to be displayed by turn.

The information display apparatus provided by the embodiment of the present disclosure can execute the steps executed by the client or the server in the information display method provided by the embodiment of the present disclosure, and has the execution steps and beneficial effects, which are not repeated here.

FIG.7 is a schematic structural diagram of an electronic device in an embodiment of the present disclosure. Referring specifically to FIG.7, there is shown a schematic structural diagram suitable for implementing an electronic device 1000 in an embodiment of the present disclosure. The electronic device 1000 in the embodiment of the present disclosure may include, but is not limited to, mobile terminals such as mobile phones, notebook computers, digital broadcast receivers, PDA (Personal Digital Assistant), PAD (Tablet Computer), PMP (Portable Multimedia Player), vehicle-mounted terminals (such as vehicle-mounted navigation terminals), wearable electronic devices, and fixed terminals such as digital TV, desktop computers, and smart home devices. The electronic device shown in FIG.7 is only an example, and should not bring any limitation to the function and application scope of the embodiment of the present disclosure.

As shown in FIG.7, an electronic device 1000 may include a processing device (e.g., a central processing unit, a graphics processor, etc.) 1001, which may perform various appropriate actions and processing according to a program stored in a read-only memory (ROM)1002 or a program loaded from a memory 1008 into a random access memory (RAM)1003 to implement the information display method according to an embodiment of the present disclosure. In the RAM 1003, various programs and information required for the operation of the electronic device 1000 are also stored. The processing device 1001, the ROM 1002 and the RAM 1003 are connected to each other through a bus 1004. An input/output (I/O) interface 1005 is also connected to the bus 1004.

Generally, the following devices can be connected to the I/O interface 1005: an input device 1006 including, for example, a touch screen, touch pad, keyboard, mouse, camera, microphone, accelerometer, gyroscope, etc.; an output device 1007 including, for example, a Liquid Crystal Display (LCD), speaker, vibrator, etc.; a storage device 1008 including, for example, magnetic tape, hard disk, etc.; and a communication device 1009. The communication device 1009 may allow the terminal device 1000 to communicate with other devices wirelessly or by wire to exchange data. While FIG. 10 illustrates a terminal device 1000 having various means, it is to be understood that it is not required to implement or provide all of the means shown. More or fewer means may be alternatively implemented or provided.

In particular, the processes described above with reference to the flow diagrams may be implemented as computer software programs, according to the embodiment of the present disclosure. For example, an embodiment of the present disclosure includes a computer program product comprising a computer program carried on a non-transitory computer readable medium, the computer program containing program code for performing the method illustrated by the flow diagram, thereby implementing the information display method as described above. In such an embodiment, the computer program may be downloaded and installed from the network via the communication device 1009, or installed from the storage device 1008, or installed from the ROM 1002. When executed by the processing device 1001, the computer program performs the above-described functions defined in the method of the embodiments of the present disclosure.

It should be noted that the computer readable medium of the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium may be any tangible medium that contains, or stores a program for use by or in combination with an instruction execution system, apparatus, or device. In contrast, in the present disclosure, a computer readable signal medium may include a data signal propagated in a baseband or as a part of a carrier wave, wherein a computer readable program code is carried therein. Such a propagated data signal may take a variety of forms, including, but not limited to, an electro-magnetic signal, an optical signal, or any suitable combination thereof. A computer-readable signal medium may be any computer readable medium other than a computer-readable storage medium and the computer-readable signal medium can communicate, propagate, or transport a program for use by or in combination with an instruction execution system, apparatus, or device. Program code embodied on a computer-readable medium may be transmitted using any appropriate medium, including but not limited to: electrical wires, optical cables, RF (radio frequency), etc., or any suitable combination thereof.

In some embodiments, the client and the server can communicate using any currently known or future-developed network protocol, such as HTTP (HyperText Transfer Protocol), and may be interconnected to digital data communication (e.g., a communication network) of any form or medium. Examples of communication networks include a local area network ("LAN"), a wide area network ("WAN"), the Internet (e.g., the Internet), and a peer-to-peer network (e.g., ad hoc peer-to-peer network), as well as any currently known or future developed network.

The computer readable medium may be included in the above-mentioned electronic device; or it may exist alone without being assembled into the electronic device.

The computer-readable medium carries one or more programs which, when executed by the electronic device, cause the electronic device to:
acquire a popularity parameter of an object to be displayed; the object to be displayed being a non-explaining object corresponding to a display page;
generate prompt information corresponding to the object to be displayed under the condition that the popularity parameter of the object to be displayed meets a prompt condition; the prompt information being used to reflect popularity of the object to be displayed;
display the prompt information on the display page.

Optionally, when the above one or more programs are executed by the electronic device, the electronic device can also perform other steps described in the above embodiments.

Computer program code for carrying out operations of the present disclosure may be written in one or more programming languages or a combination thereof, the programming languages include, but are not limited to an object oriented programming language such as Java, Smalltalk, C++, and also include conventional procedural programming languages, such as the "C" programming language, or similar programming languages. The program code can be executed entirely on the user's computer, partly on the user's computer, as an independent software package, partly on the user's computer and partly executed on a remote computer, or entirely on the remote computer or server. In the scenario involving a remote computer, the remote computer may be connected to the user's computer through any type of network, including a Local Area Network (LAN) or a Wide Area Network (WAN), or may be connected to an external computer (for example, through the Internet using an Internet service provider).

The flow diagrams and block diagrams in the figures illustrate the architecture, functionality, and operation that are possibly implemented by systems, methods and computer program products according to various embodiments of the present disclosure. In this regard, each block in the flow diagrams or block diagrams may represent a module, program segment, or portion of code, which comprises one or more executable instructions for implementing the specified logical function(s). It should also be noted that, in some alternative implementations, the functions noted in the blocks may occur in an order different from that noted in the figures. For example, two blocks shown in succession may, in fact, be executed substantially concurrently, or they may sometimes be executed in a reverse order, depending upon the function involved. It will also be noted that each block of the block diagrams and/or flow diagrams, and a combination of blocks in the block diagrams and/or flow diagrams, can be implemented by special purpose hardware-based systems that perform the specified functions or operations, or combinations of special purpose hardware and computer instructions.

The units described in the embodiments of the present disclosure may be implemented by software or hardware. Wherein the name of a unit does not in some cases constitute a limitation on the unit itself.

The functions described herein above may be performed, at least in part by one or more hardware logic components. For example, without limitation, exemplary types of hardware logic components that may be used include Field Programmable Gate Arrays (FPGAs), Application Specific Integrated Circuits (ASICs), Application Specific Standard Products (ASSPs), Systems on a Chip (SOCs), Complex Programmable Logic Devices (CPLDs), and so forth.

In the context of this disclosure, a machine readable medium may be a tangible medium that can contain, or store a program for use by or in combination with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination thereof. More specific examples of the machine readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, the present disclosure provides an electronic device comprising:
a memory; and
a processor coupled to the memory, the processor configured to execute any one of the information display processing methods provided by the present disclosure based on instructions stored in the memory.

According to one or more embodiments of the present disclosure, the present disclosure provides a computer-readable storage medium, on which a computer program is stored that, when executed by a processor, implements any of the information display processing methods provided by the present disclosure.

The embodiment of the present disclosure also provides a computer program product, which comprises a computer program or instructions which, when executed by a processor, implement the information display processing methods as described above.

The embodiment of the present disclosure also provides a computer program, comprising:
instructions that, when executed by a processor, cause the processor to perform any of the information display processing methods as described above.

It is to be noted that terms used herein to describe relations such as "first" and "second" and the like are only used to distinguish one entity or operation from another entity or operation without necessarily requiring or implying any actual such relationship or order between such entities or actions. Furthermore, the term "comprising", "including" or any other variable intends to cover other nonexclusive containing relations to ensure that a process, method, article or apparatus comprising a series of factors comprises not only those factors but also other factors not explicitly listed, or further comprises factors innate to the process, method, article or apparatus. Without more limitations, a factor defined with the sentence "comprising one......" does not exclude the case that the process, method, article or apparatus comprising said factor still comprises other identical factors.

The previous description is only for the purpose of describing particular embodiments of the present disclosure, so as to enable those skilled in the art to understand or implement the present disclosure. Plurality of amendments to these embodiments are obvious for those skilled in the art. The general principle defined in this text can be realized in other embodiments without deviating from the scope of the present disclosure. Therefore, the present disclosure will not be limited to these embodiments as shown herein, but is to conform to the broadest scope that is consistent with the principle and novel features as disclosed herein.

## Claims

1. An information display method, comprising:
acquiring a popularity parameter of an object to be displayed, wherein the object to be displayed is an object not explained currently corresponding to a display page;
generating prompt information corresponding to the object to be displayed in response to the popularity parameter of the object to be displayed meeting a prompt condition, wherein the prompt information is configured to reflect popularity of the object to be displayed;
displaying the prompt information on the display page; and
displaying an object display page corresponding to the display page in the display page in response to a trigger operation for the prompt information, wherein the object display page is a list that summarizes detailed information of all objects corresponding to the display page and comprises detailed information of the object to be displayed, wherein a display position of the detailed information of the object to be displayed is a first display position in the object display page, or at least part of the detailed information of the object to be displayed is displayed in a highlighted state.

2. The information display method of claim 1, wherein the display page is a display page of a live streaming channel, and the object to be displayed is a product to be explained corresponding to the live streaming channel.

3. The information display method of claim 1 or 2, wherein:
the popularity parameter comprises at least one of a number of followers, a number of favorites, a number of purchases, a number of comments, a number of shares, a number of views, a number of inquiries and a number of likes of the object to be displayed; and
the prompt condition is that the popularity parameter is greater than or equal to a first threshold in a reference time period.

4. The information display method of any one of claims 1 to 3, wherein the prompt information comprises identification information of the object to be displayed and the popularity parameter.

5. The information display method of any one of claims 1 to 4, further comprising:
after the prompt information is displayed on the display page, updating the popularity parameter in the prompt information currently displayed in response to a change of the popularity parameter of the object to be displayed corresponding to the prompt information currently displayed; or
after the prompt information is displayed on the display page, adjusting a display duration of the prompt information currently displayed in response to a change of the popularity parameter of the object to be displayed corresponding to the prompt information currently displayed.

6. The information display method of any one of claims 1 to 5, wherein the displaying the prompt information on the display page comprises:
displaying the prompt information on the display page in response to the display page not comprising explanation information of an object currently being explained.

7. The information display method of any one of claims 1 to 6, wherein the displaying the prompt information on the display page comprises:
in response to the display page comprising explanation information of an object currently being explained, displaying the prompt information after a display of the explanation information of the object currently explained is completed.

8. The method of any one of claims 1 to 7, wherein the displaying the prompt information on the display page comprises:
in response to popularity parameters of at least two objects to be displayed meet the prompt condition, displaying prompt information corresponding to the at least two objects in order on the display page.

9. The method of claim 8, wherein the displaying the prompt information corresponding to the at least two objects in order on the display page comprises:
arranging the prompt information of the at least two objects to be displayed to form a display queue; and
displaying the prompt information corresponding to the at least two objects to be displayed in order according to the order of the display queue.

10. The method of Claim 8 or 9, wherein the displaying the prompt information corresponding to the at least two objects in order on the display page comprises:
displaying the prompt information corresponding to the at least two objects to be displayed by turn.

11. An information display apparatus, comprising:
an acquisition module configured to acquire a popularity parameter of an object to be displayed, wherein the object to be displayed is an object not explained currently corresponding to a display page;
a generation module configured to generate prompt information corresponding to the object to be displayed in response to the popularity parameter of the object to be displayed meeting a prompt condition, wherein the prompt information is configured to reflect popularity of the object to be displayed; and
a display module configured to display the prompt information on the display page; and to display an object display page corresponding to the display page in the display page in response to a trigger operation for the prompt information, wherein the object display page is a list that summarizes detailed information of all objects corresponding to the display page and comprises detailed information of the object to be displayed, wherein a display position of the detailed information of the object to be displayed is a first display position in the object display page, or at least part of the detailed information of the object to be displayed is displayed in a highlighted state.

12. An electronic device, comprising:
a memory; and
a processor coupled to the memory, the processor configured to, based on instructions stored in the memory, implement the information display method of any one of claims 1 to 10.

13. A computer-readable storage medium on which a computer program is stored which, when executed by a processor, implements the information display method of any one of claims 1 to 10.

## Patentansprüche

1. Informationsanzeigeverfahren, umfassend:
Erfassen eines Popularitätsparameters eines anzuzeigenden Objekts, wobei das anzuzeigende Objekt ein Objekt ist, das aktuell nicht erläutert wird, das einer Anzeigeseite entspricht;
Erzeugen von Eingabeaufforderungsinformationen, die dem anzuzeigenden Objekt entsprechen, als Reaktion auf den Popularitätsparameter des anzuzeigenden Objekts, das eine Eingabeaufforderungsbedingung erfüllt, wobei die Eingabeaufforderungsinformationen konfiguriert sind, um die Popularität des anzuzeigenden Objekts widerzuspiegeln;
Anzeigen der Eingabeaufforderungsinformationen auf der Anzeigeseite; und
Anzeigen einer Objektanzeigeseite, die der Anzeigeseite entspricht, in der Anzeigeseite, als Reaktion auf eine Auslöseoperation für die Eingabeaufforderungsinformationen, wobei die Objektanzeigeseite eine Liste ist, die detaillierte Informationen aller Objekte zusammenfasst, die der Anzeigeseite entsprechen, und detaillierte Informationen des anzuzeigenden Objekts umfasst, wobei eine Anzeigeposition der detaillierten Informationen des anzuzeigenden Objekts eine erste Anzeigeposition in der Objektanzeigeseite ist oder mindestens ein Teil der detaillierten Informationen des anzuzeigenden Objekts in einem hervorgehobenen Zustand angezeigt wird.

2. Informationsanzeigeverfahren nach Anspruch 1, wobei die Anzeigeseite eine Anzeigeseite eines Live-Streaming-Kanals ist und das anzuzeigende Objekt ein dem Live-Streaming-Kanal entsprechendes Produkt ist, das erläutert werden soll.

3. Informationsanzeigeverfahren nach Anspruch 1 oder 2, wobei:
der Popularitätsparameter mindestens eines umfasst von einer Anzahl der Follower, Anzahl der Favoriten, Anzahl der Käufe, einer Anzahl der Kommentare, einer Anzahl der Teilen-Vorgänge, einer Anzahl der Seitenaufrufe, einer Anzahl der Anfragen und einer Anzahl der Gefällt-mir-Angaben des anzuzeigenden Objekts; und
die Eingabeaufforderungsbedingung ist, dass der Popularitätsparameter in einem Referenzzeitraum größer als oder gleich einem ersten Schwellenwert ist.

4. Informationsanzeigeverfahren nach einem der Ansprüche 1 bis 3, wobei die Eingabeaufforderungsinformationen Identifikationsinformationen des anzuzeigenden Objekts und den Popularitätsparameter umfassen.

5. Informationsanzeigeverfahren nach einem der Ansprüche 1 bis 4, weiter umfassend:
nachdem die Eingabeaufforderungsinformationen auf der Anzeigeseite angezeigt wurden, Aktualisieren des Popularitätsparameters in den aktuell angezeigten Aufforderungsinformationen als Reaktion auf eine Änderung des Popularitätsparameters des anzuzeigenden Objekts, das den aktuell angezeigten Eingabeaufforderungsinformationen entspricht; oder
nachdem die Eingabeaufforderungsinformationen auf der Anzeigeseite angezeigt wurden, Anpassen der Anzeigedauer der aktuell angezeigten Eingabeaufforderungsinformationen als Reaktion auf eine Änderung des Popularitätsparameters des anzuzeigenden Objekts, das den aktuell angezeigten Eingabeaufforderungsinformationen entspricht.

6. Informationsanzeigeverfahren nach einem der Ansprüche 1 bis 5, wobei das Anzeigen der Eingabeaufforderungsinformationen auf der Anzeigeseite Folgendes umfasst:
Anzeigen der Eingabeaufforderungsinformationen auf der Anzeigeseite als Reaktion darauf, dass die Anzeigeseite keine Erläuterungsinformationen zu einem aktuell erläuterten Objekt umfasst.

7. Informationsanzeigeverfahren nach einem der Ansprüche 1 bis 6, wobei das Anzeigen der Eingabeaufforderungsinformationen auf der Anzeigeseite Folgendes umfasst:
als Reaktion darauf, dass die Anzeigeseite Erläuterungsinformationen zu einem Objekt, das aktuell erläutert wird, umfasst, Anzeigen der Eingabeaufforderungsinformationen, nachdem eine Anzeige der Erläuterungsinformationen des aktuell erläuterten Objekts abgeschlossen ist.

8. Verfahren nach einem der Ansprüche 1 bis 7, wobei das Anzeigen der Eingabeaufforderungsinformationen auf der Anzeigeseite Folgendes umfasst:
als Reaktion darauf, dass Popularitätsparameter von mindestens zwei anzuzeigenden Objekten die Eingabeaufforderungsbedingung erfüllen, Anzeigen der Eingabeaufforderungsinformationen, die den mindestens zwei Objekten entsprechen, auf der Anzeigeseite in Reihenfolge.

9. Verfahren nach Anspruch 8, wobei das Anzeigen der Eingabeaufforderungsinformationen, die den mindestens zwei Objekten auf der Anzeigeseite in Reihenfolge entsprechen, Folgendes umfasst:
Anordnen der Eingabeaufforderungsinformationen der mindestens zwei anzuzeigenden Objekte, um eine Anzeigewarteschlange zu bilden; und
Anzeigen der Eingabeaufforderungsinformationen, die den mindestens zwei Objekten entsprechen, die gemäß der Reihenfolge der Anzeigewarteschlange in Reihenfolge angezeigt werden sollen.

10. Verfahren nach Anspruch 8 oder 9, wobei das Anzeigen der Eingabeaufforderungsinformationen, die den mindestens zwei Objekten entsprechen, auf der Anzeigeseite in Reihenfolge Folgendes umfasst:
Anzeigen der Eingabeaufforderungsinformationen, die den mindestens zwei nacheinander anzuzeigenden Objekten entsprechen.

11. Informationsanzeigeeinrichtung, umfassend:
ein Erfassungsmodul, das konfiguriert ist, um einen Popularitätsparameter eines anzuzeigenden Objekts zu erfassen, wobei das anzuzeigende Objekt ein Objekt ist, das einer Anzeigeseite entspricht, das aktuell nicht erläutert wird;
ein Erzeugungsmodul, das konfiguriert ist, um als Reaktion auf den Popularitätsparameter des anzuzeigenden Objekts, das eine Eingabeaufforderungsbedingung erfüllt, Eingabeaufforderungsinformationen zu erzeugen, die dem anzuzeigenden Objekt entsprechen, wobei die Eingabeaufforderungsinformationen konfiguriert sind, um die Popularität des anzuzeigenden Objekts widerzuspiegeln;
ein Anzeigemodul, das konfiguriert ist, um die Eingabeaufforderungsinformationen auf der Anzeigeseite anzuzeigen; und um als Reaktion auf eine Auslöseoperation für die Eingabeaufforderungsinformationen in der Anzeigeseite eine Objektanzeigeseite anzuzeigen, die der Anzeigeseite entspricht, wobei die Objektanzeigeseite eine Liste ist, die detaillierte Informationen aller Objekte zusammenfasst, die der Anzeigeseite entsprechen, und detaillierte Informationen des anzuzeigenden Objekts umfasst, wobei eine Anzeigeposition der detaillierten Informationen des anzuzeigenden Objekts eine erste Anzeigeposition in der Objektanzeigeseite ist oder mindestens ein Teil der detaillierten Informationen des anzuzeigenden Objekts in einem hervorgehobenen Zustand angezeigt wird.

12. Elektronische Vorrichtung, umfassend:
einen Arbeitsspeicher; und
einen mit dem Arbeitsspeicher gekoppelten Prozessor, wobei der Prozessor konfiguriert ist, um auf der Grundlage von in dem Arbeitsspeicher gespeicherten Anweisungen das Informationsanzeigeverfahren nach einem der Ansprüche 1 bis 10 zu implementieren.

13. Computerlesbares Speichermedium, auf dem ein Computerprogramm gespeichert ist, das, wenn von einem Prozessor ausgeführt, das Informationsanzeigeverfahren nach einem der Ansprüche 1 bis 10 implementiert.

## Revendications

1. Procédé d'affichage d'informations, comprenant :
l'acquisition d'un paramètre de popularité d'un objet à afficher, dans lequel l'objet à afficher est un objet non expliqué correspondant actuellement à une page d'affichage ;
la génération d'informations d'invite correspondant à l'objet à afficher en réponse au fait que le paramètre de popularité de l'objet à afficher remplit une condition d'invite, dans lequel les informations d'invite sont configurées pour refléter la popularité de l'objet à afficher ;
l'affichage des informations d'invite sur la page d'affichage ; et
l'affichage d'une page d'affichage d'objet correspondant à la page d'affichage en réponse à une opération de déclenchement pour les informations d'invite, dans lequel la page d'affichage d'objet est une liste provisoire résumant des informations détaillées de tous les objets correspondant à la page d'affichage et comprenant des informations détaillées de l'objet à afficher, dans lequel une position d'affichage des informations détaillées de l'objet à afficher est une première position d'affichage dans la page d'affichage d'objet, ou au moins une partie des informations détaillées de l'objet à afficher est affichée en surbrillance.

2. Procédé d'affichage d'informations selon la revendication 1, dans lequel la page d'affichage est une page d'affichage d'une chaîne de diffusion en direct, et l'objet à afficher est un produit à expliquer correspondant à la chaîne de diffusion en direct.

3. Procédé d'affichage d'informations selon la revendication 1 ou 2, dans lequel :
le paramètre de popularité comprend au moins un des éléments suivants : nombre d'abonnés, nombre de favoris, nombre d'achats, nombre de commentaires, nombre de partages, nombre de vues, nombre de demandes de renseignements et nombre de mentions « J'aime » de l'objet à afficher ; et
la condition d'invite est que le paramètre de popularité soit supérieur ou égal à un premier seuil dans une période de référence.

4. Procédé d'affichage d'informations selon l'une quelconque des revendications 1 à 3, dans lequel les informations d'invite comprennent des informations d'identification de l'objet à afficher et le paramètre de popularité.

5. Procédé d'affichage d'informations selon l'une quelconque des revendications 1 à 4, comprenant en outre :
une fois les informations d'invite affichées sur la page d'affichage, la mise à jour du paramètre de popularité dans les informations d'invite actuellement affichées en réponse à une modification du paramètre de popularité de l'objet à afficher correspondant aux informations d'invite actuellement affichées ; ou
une fois les informations d'invite affichées sur la page d'affichage, l'ajustement d'une durée d'affichage des informations d'invite actuellement affichées en réponse à une modification du paramètre de popularité de l'objet à afficher, correspondant aux informations d'invite actuellement affichées.

6. Procédé d'affichage d'informations selon l'une quelconque des revendications 1 à 5, dans lequel l'affichage des informations d'invite sur la page d'affichage comprend :
l'affichage des informations d'invite sur la page d'affichage en réponse au fait que la page d'affichage ne contient pas d'informations explicatives sur un objet en cours d'explication.

7. Procédé d'affichage d'informations selon l'une quelconque des revendications 1 à 6, dans lequel l'affichage des informations d'invite sur la page d'affichage comprend :
en réponse au fait que la page d'affichage contient des informations explicatives d'un objet en cours d'explication, l'affichage des informations d'invite une fois l'affichage des informations explicatives de l'objet en cours d'explication terminé.

8. Procédé selon l'une quelconque des revendications 1 à 7, dans lequel l'affichage des informations d'invite sur la page d'affichage comprend :
en réponse au fait que des paramètres de popularité d'au moins deux objets à afficher remplissent la condition d'invite, l'affichage d'informations d'invite correspondant aux au moins deux objets dans l'ordre sur la page d'affichage.

9. Procédé selon la revendication 8, dans lequel l'affichage des informations d'invite correspondant aux au moins deux objets dans l'ordre sur la page d'affichage comprend :
l'agencement des informations d'invite des au moins deux objets à afficher pour former une file d'attente d'affichage ; et
l'affichage des informations d'invite correspondant aux au moins deux objets à afficher dans l'ordre selon l'ordre de la file d'attente d'affichage.

10. Procédé selon la revendication 8 ou 9, dans lequel l'affichage des informations d'invite correspondant aux au moins deux objets dans l'ordre sur la page d'affichage comprend :
l'affichage des informations contextuelles correspondant aux au moins deux objets à afficher tour à tour.

11. Appareil d'affichage d'informations, comprenant :
un module d'acquisition configuré pour acquérir un paramètre de popularité d'un objet à afficher, dans lequel l'objet à afficher est un objet non expliqué correspondant actuellement à une page d'affichage ;
un module de génération configuré pour générer des informations d'invite correspondant à l'objet à afficher en réponse au fait que le paramètre de popularité de l'objet à afficher remplit une condition d'invite, dans lequel les informations d'invite sont configurées pour refléter la popularité de l'objet à afficher ; et
un module d'affichage configuré pour afficher les informations d'invite sur la page d'affichage ; et pour afficher une page d'affichage d'objet correspondant à la page d'affichage dans la page d'affichage en réponse à une opération de déclenchement des informations d'invite, dans lequel la page d'affichage d'objet est une liste récapitulant des informations détaillées de tous les objets correspondant à la page d'affichage et comprenant des informations détaillées de l'objet à afficher, dans lequel une position d'affichage des informations détaillées de l'objet à afficher est une première position d'affichage dans la page d'affichage d'objet, ou au moins une partie des informations détaillées de l'objet à afficher sont affichée en surbrillance.

12. Dispositif électronique comprenant :
une mémoire ; et
un processeur couplé à la mémoire, le processeur étant configuré pour, sur la base d'instructions stockées dans la mémoire, mettre en œuvre le procédé d'affichage d'informations selon l'une quelconque des revendications 1 à 10.

13. Support de stockage lisible par ordinateur, sur lequel est stocké un programme informatique qui, lorsqu'il est exécuté par un processeur, met en œuvre le procédé d'affichage d'informations selon l'une quelconque des revendications 1 à 10.
